# EUROPEAN PATENT APPLICATION

(11) **EP 4 541 598 A1**
(43) Date of publication of application: **23.04.2025**
(21) Application number: 23204109.5
(22) Date of filing: 17.10.2023
(51) Int. Cl.: B41J 29/377, B41J 29/13, B23K 26/12, B41J 2/475, B41J 2/44

(54) **MARKING APPARATUS AND MARKING METHOD**

(71) Applicant: Cajo Technologies Oy, 90440 Kempele (FI)
(72) Inventor: Karsikas, Mika, 90440 Kempele (FI)
(74) Representative: Kolster Oy Ab

(57) **Abstract**

A marking apparatus comprising a laser arrangement (100) that outputs optical power along an optical path (210) to a marking area (20). The marking apparatus (2) comprises a case (200) and a ventilation system (204) for causing a gas flow through the case (200), the ventilation system (204) comprising one or more blast pipes (206) connected to the case (200), the one or more blast pipes (206) guiding the gas flow from the case (200) toward the optical path (210) of the optical power between the case (200) and the marking area (20) for reducing dust and/or smoke in the optical path (210).

## Description

### Field

The invention relates to a marking apparatus and a marking method.

### Background

A laser such as carbon dioxide laser can be used to make markings such as alpha-numeral and/or other writing system symbols, data matrices, trade marks, QR-codes and/or barcodes on cardboard or other solid material. When performing the transference of the marks care should be taken for delivering the right amount of optical power should to the object in order to ensure clearly readable mark. The optical power delivered to the object may be affected by scattering and attenuation caused by dust and/or smoke in the optical path between the laser and the object which may reduce the readability, accuracy, contrast and/or quality of the marks. Hence, an improvement would be welcome.

### Brief description

The present invention seeks to provide an improvement in the marking process.

The invention is defined by the independent claims. Embodiments are defined in the dependent claims.

If one or more of the embodiments is considered not to fall under the scope of the independent claims, such an embodiment is or such embodiments are still useful for understanding features of the invention.

### List of drawings

Example embodiments of the present invention are described below, by way of example only, with reference to the accompanying drawings, in which
Figure 1 illustrates an example an example of the marking apparatus with a plurality of features;
Figure 2 illustrates another example of the marking apparatus with combined air ventilation of electrical power consuming circuits and gas flow arrangement for removing smoke and/or dust from the optical path;
Figure 3 illustrates an example of a blast pipe directed to the optical path;
Figure 4 illustrates an example of two blast pipes directed to the optical path;
Figure 5 illustrates an example of two blast pipes seen from above of the marking apparatus;
Figure 6 illustrates an example where the marking apparatus has also vacuum pipe(s);
Figure 7 illustrates an example where one blast pipe has a nozzle and other has the end of the blast pipe as a mouthpiece;
Figure 8 illustrates an example where the marking apparatus is within a chamber;
Figures 9 and 10 illustrate examples where the blast pipe surrounds the optical path;
Figure 11 illustrates an example where the blast pipe has an adjustable valve for controlling the gas flow;
Figure 12 illustrates an example of a controller; and
Figure 13 illustrates of an example of a flow chart of a marking method.

### Description of embodiments

The following embodiments are only examples. Although the specification may refer to "an" embodiment in several locations, this does not necessarily mean that each such reference is to the same embodiment(s), or that the feature only applies to a single embodiment.

The articles "a" and "an" give a general sense of entities, structures, components, compositions, operations, functions, connections or the like in this document. Note also that singular terms may include pluralities.

Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

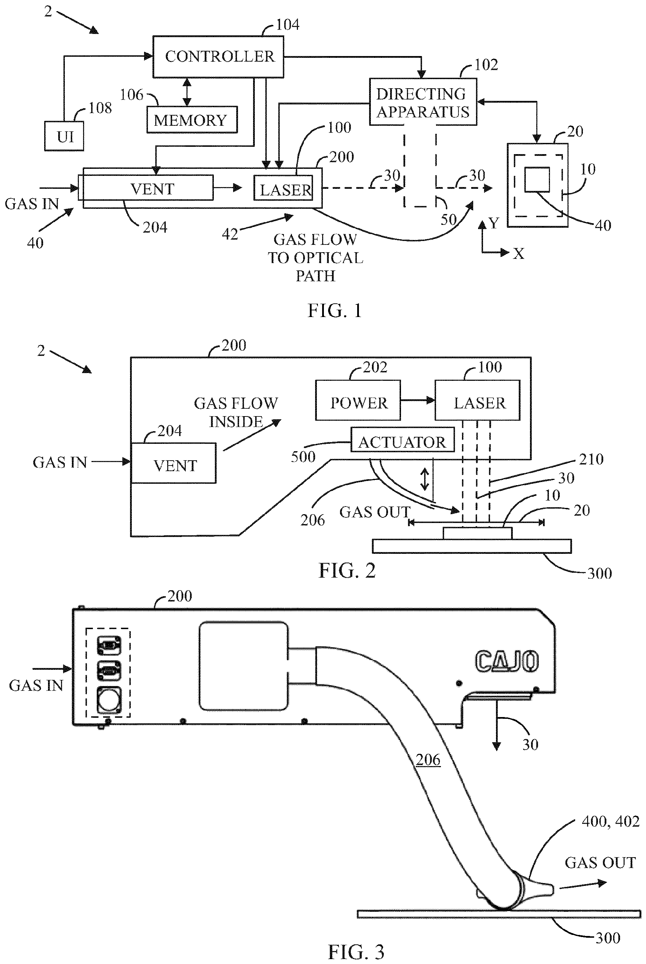

Fig. 1 illustrates an example of a marking apparatus 2. The marking apparatus 2 comprises laser arrangement 100, which outputs a laser beam 30.

The laser arrangement 100 may alternatively comprise a pulsed fibre laser, for example. The laser to be used may be chosen depending on materials/shapes of the part 10 to be marked, for example. The carbon dioxide laser may be used for the permanent marking of plastic, glass, stone, wood, leather, and other organic materials, for example. The wavelength of the carbon dioxide laser may be about 10 600 nm ± about 2 000 nm, for example. The pulsed fibre laser may be used for the permanent marking of metals, coated metals, soft materials like polymers, such as silicon, and sensitive parts including electronic components, for example. The laser arrangement 100 may comprise a fiber laser. The wavelength of the pulse fibre laser may be about 1070 nm ± about 100 nm. Other useful laser wavelengths may be about 355 nm and about 532 nm, for example.

The marking apparatus 2 also comprises at least one laser beam directing apparatus 102, which adaptively directs the laser beam 30 to a marking area 20. From this on, the at least one laser beam directing apparatus 102 is called the laser beam directing apparatus 102, for simplicity. The marking area 20 is for a solid material 10. The solid material 10 may be of vegetable fibers with natural hue such as cardboard or paper which is unbleached or only partially bleached having more or less the natural hue. Other possibilities for the solid material 10 may be plastic, glass, stone, wood, leather, metals, coated metals, soft materials like polymers, such as silicon, and sensitive parts including electronic components and various organic materials, for example, without restricting to these. When the solid material 10 is at least partly inside or fully within the marking area 20, a representation 40 of at least one mark of the one or more marks, information on which is in one or more memories 106, can be formed on the solid material 10. The representation 40 can be considered an image of the at least one mark.

At least one controller 104, which in an embodiment controls both the laser operations and the ventilation, may receive information on the at least one mark from the one or more memories 108. From this on the at least one controller 104 is called the controller 104, for simplicity. Then the controller 104 controls the laser beam directing apparatus 102 for making the representation on the solid material 10. The energy range of the optical power may depend on the representation 40 and/or the solid material 10. A person skilled in the art is familiar with the power control of the optical beam 30, the required optical power per unit area of the solid material 10, *per se.*

The laser beam directing apparatus 102 causes the laser beam 30 to travel on the solid material 10 in response to the control by the controller 104. The travelling of the laser beam 30 is based on the at least one mark for forming the representation 40 on a surface of the solid material 10 with a selected at least one energy-per-unit-area range in the one or more process stages.

The representation 40 is then detectable under suitable illumination and potential magnification. In an embodiment, the representation 40 is visible.

In an embodiment, the controller 104 may control the wavelength of the laser arrangement 100 with respect to the natural and/or potential artificial hue and/or composition of the solid material 10. Additionally or alternatively, the controller 104 may control the wavelength of the laser arrangement 100 with respect to at least one mark that is to be transferred on a surface of the solid material 10.

In an embodiment, the laser beam 30 may be made to travel on the solid material 10 by moving the laser arrangement 100 or the laser with respect to the solid material 10. They may be moved by the laser beam directing apparatus 102 under control of the controller 104. The laser beam directing apparatus 102 may comprise electric, pneumatic or hydraulic mover(s)/motor(s), conveyor belt, for example.

In an embodiment, the laser beam 30 may be made to travel on the solid material 10 by moving the solid material 10 with respect to the laser arrangement 100 by the laser beam directing apparatus 102, which may comprise electric, pneumatic or hydraulic mover(s)/motor(s), conveyor belt, for example. In an example, the laser beam directing apparatus 102 may comprise a roll-to-roll system. A person skilled in the art is familiar with these kinds of movement arrangements, *per se.*

In an embodiment, the laser beam 30 may be made to travel on the solid material 10 by turning the laser beam 30 by one or more optical components, which may include optomechanical components, electro-optical components, acousto-optical components and/or magneto-optical components.

Fig. 1 illustrates an example of the marking system that utilizes ventilation of a case 200. The case 200 has at least one intake aperture 40 that may be located at the back of the case 200. At least one ventilation fan of the ventilation 204 draws gas, typically air, from outside of the case 200 (ventilation fan is not illustrated in Figs because it, *per se,* is generally well known). In this manner the at least one ventilation fan causes gas flow within the case 200. Then the gas flow is directed through at least one output aperture 42 outward from inside the case 200. The gas flow may be used to transfer heat from the marking apparatus. In an embodiment, the ventilation may be a part of the cooling system of the marking system 2. In an embodiment, the ventilation may be a part of the cooling system of the electric circuits of the marking system 2. In this manner, the gas flow may limit a maximum temperature of the marking apparatus, the electric circuits and/or the laser.

Fig. 2 illustrates also the marking apparatus 2. At least one laser source of the laser arrangement 100 outputs optical power along the optical path 210 to a marking area 20 of the marking apparatus 2 (laser source(s), per se, is (are) not illustrated in Figs because a person skilled in the art is familiar with them). At least one electrical power circuit 202 that supplies electrical power for operation of the laser arrangement 100 may be located within the case 200 or fully or partially outside the case 200. The marking apparatus 2 also comprises a ventilation system 204 for causing a gas flow through the case 200. The case 200 may also be considered a part of the ventilation system 204. The ventilation system 204 comprises one or more blast pipes 206 connected to the case 200. The one or more blast pipes 206 guide the gas flow from inside the case 200 toward the optical path 210 of the optical power between the case 200 and the marking area 20. The gas flow reduces dust and/or smoke in the optical path 210. In that manner, the less there are/is dust and/or smoke in the optical path, the less the optical radiation scatters and/or attenuates. Additionally, there is less dust on the surface of the solid material 10 and the surface thus remains clean during and after marking. The optical beam at the marking area 20 is then sharp and accurate on a clean surface of the solid material 10, which results in a sharp and accurate representation on the solid material 10.

The case 200 has an optical window for optical radiation but the case 200, the one or more blast pipes 206 and a joint between the case 200 and the one or more blast pipes 206 may be dust tight such that the gas can only come to the case 200 from the at least one intake aperture 40 and the gas can leave through mouth pieces 400 of the one or more blast pipes 206.

In an embodiment, at least one of the one or more blast pipes 206 may comprise a nozzle 402 that directs the gas flow to the optical path 210 in an accurate manner. A diameter of the gas flow and an angular distribution of the blow from the nozzle 402 may be smaller than a blow directly from an open end of the blast pipe 206. The nozzle 402 refers to a tapering part at the end of the blast pipe 206 (note that the other end of the blast pipe 206 is integrated with the case 200). In this document a mouthpiece 400 means both the open end of the pipe 206 and a nozzle 402 without making separation between them.

In an embodiment, at least one of the one or more blast pipes 206 may be bendable for moving the mouthpiece 400 of the at least one blast pipe 206. That the blast pipe 206 bends enables the gas flow to be directed to a desired location at the optical path 210. In that manner, dust and/or smoke can be expelled from the air between the case 200 and the marking area 20, from the optical window of the case and/or from the marking area with or without the solid material 10. When the solid material 10 is present in the marking area 20, the surface of the solid material 10 can be cleaned and/or kept clean for the marking.

In an embodiment an example of which is illustrated in Fig. 2, the ventilation system 204 may comprise an actuator 500 that may move the at least one mouthpiece 400 of the one or more blast pipes 206 by bending the one or more blast pipes 206. The actuator 500 may comprise an electric motor and mechanical gear for bending the blast pipe 206. Additionally or alternatively, the actuator 500 may receive energy for its mechanical work from the ventilation system 204. That is, the actuator may be pneumatic. A person skilled in the art is familiar with various possibilities for causing the bend of the blast pipe 206, *per se.*

In an embodiment, a controller 104 of the marking apparatus 2 may cause the actuator 500 to move the at least one of the one or more blast pipes 206 in a sweeping manner over at least a part of the optical path 210. When the mouthpiece of the blast pipe 206 moves up and down following the optical axis, dust and/or smoke can be expelled from the whole volume occupied by the optical radiation.

In an embodiment, a controller 104 of the marking apparatus 2 may cause the actuator 500 to move the at least one of the one or more blast pipes 206 to direct the gas flow from a mouthpiece 400 of the at least one blast pipe 206 toward at least one of the following: the laser arrangement 100, the optical path 210 between the laser arrangement 100 and the marking area 20 and the marking area 20. The case 200 has an optical window for the optical radiation at the laser arrangement 100. The gas flow from one or more mouthpieces 400 expels dust and/or smoke from the optical window and prevents approaching dust and/or smoke from contact with the optical window by repelling dust and/or smoke with the flow.

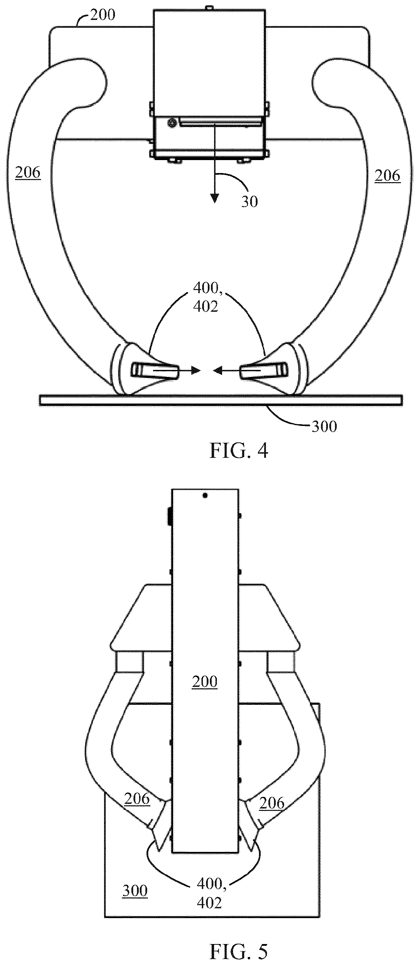

In an embodiment an example of which is illustrated in Figs 4 to 7, the ventilation system 204 may comprise at least two blast pipes 206 that direct gas to the optical path 210 from different directions. The blow from different directions, mixes the dust and/or smoke and expels it effectively. The at least two blast pipes 206 may additionally or alternatively direct the gas flow at different distances from the case 200. In that manner, dust and/or smoke can be expelled from the optical path 210 in opposite directions at different distances from the case 200.

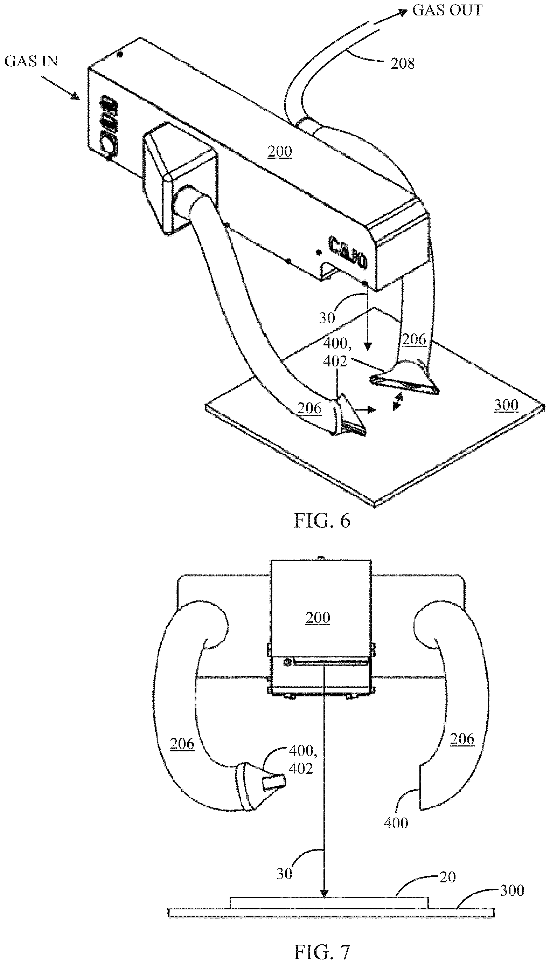

In an embodiment an example of which is illustrated in Fig. 6, the ventilation system 204 may comprise at least one vacuum pipe 208 that sucks gas with dust and smoke from the optical path 210. The vacuum pipe 208 may be powered by the ventilation system 204. In an embodiment, the sucking force may be realized by an ejector through which the gas flow generated by the ventilation system 204 is fed. In an embodiment, the vacuum pipe 208 may be moved and/or bent in a corresponding manner to the blast pipe(s) 206.

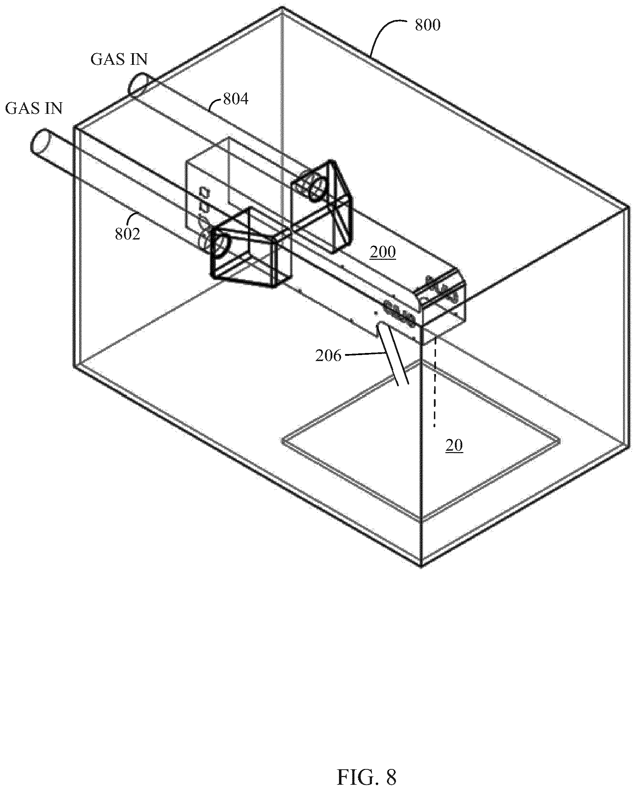

In an embodiment an example of which is illustrated in Fig. 8, the marking apparatus 2 may locate within a chamber 800. The chamber may receive a gas flow from outside the chamber 800 through feed pipes 802, 804, and the gas is removed from the chamber 800 through the blast pipe 206. In that manner, dust and/or smoke do/does not enter the chamber 800 or are/is quickly removed from the chamber 800 which leads to a clearer optical path 210. The chamber 800 may have a higher pressure than the environment. In an embodiment different from Fig. 8, the laser may be outside the chamber 800 and the laser beam is guided to the marking area by optical components such as lenses, mirrors and/or optical fibers.

In an embodiment, the pipe 802 may feed the gas to the chamber 800 and the pipe 804 may be a return pipe in which the gas flows outward from the chamber 800. In that manner, dust and/or smoke do not spread in a larger area such as in the room where the marking apparatus 2 is. The gas flow outward in pipe 804 may be smaller than the gas flow through the pipe 802 into the chamber 800.

In an embodiment, the ventilation system 204 with the one or more blast pipes 206 and the case 200 may form an integrated enclosure that is dust tight according to an international standard IP65. In an embodiment, the chamber 800 may be dust tight according to an international standard IP65. IP65 includes in addition to dust tightness also watertightness against water jets and water projected by a nozzle.

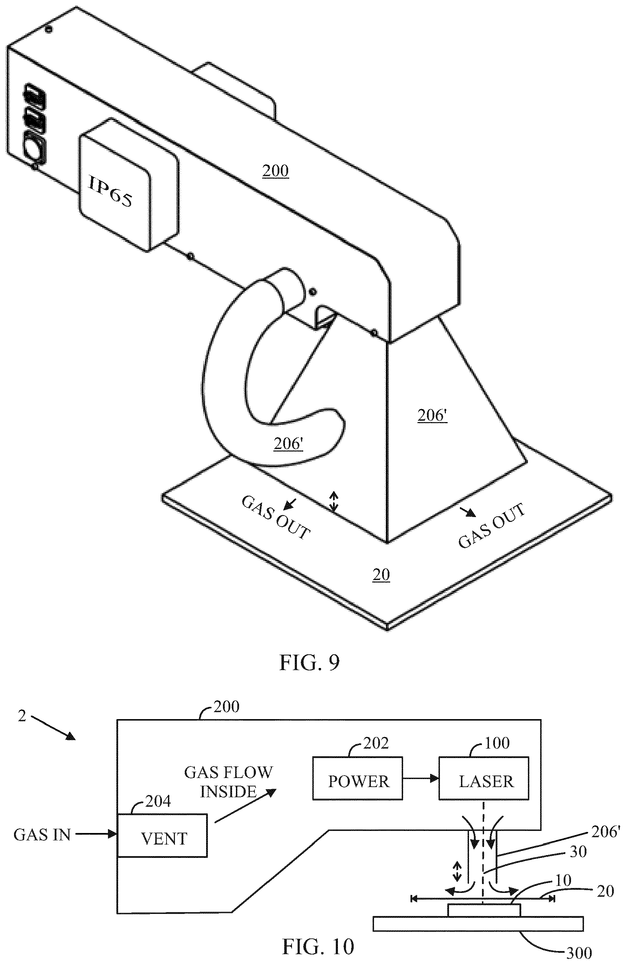

In an embodiment an example of which is illustrated in Fig. 10, the ventilation system 204 may comprise a codirectional blast pipe 206' that is one or the only one of the one or more blast pipes 206. The codirectional blast pipe 206' may surround the optical path 210 for a part of a distance between the case 200 and marking area 20. The codirectional blast pipe 206' may guide the gas flow from the case 200 in a parallel direction to the optical path 210 between the laser source 200 and the marking area 20. In an embodiment, the codirectional blast pipe 206' may be at least partially telescopic. In an embodiment, the controller 104 may control a length of the telescopic part of the blast pipe 206'. When the length of the blast pipe 206 is controlled it also means the actuator 500 moves the at least one mouthpiece 400 of the one or more blast pipes 206 under control of the controller 104.

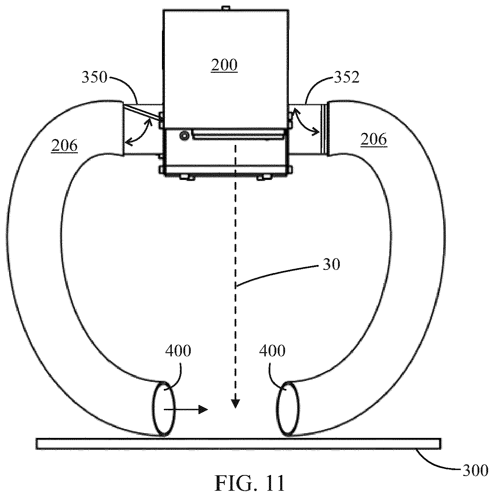

In an embodiment an example of which is illustrated in Fig. 11, at least two blast pipes 206 may have valves 350, 352, which can be opened and closed under control of the controller 104, programmable logic controller (PLC) or manually. The control may be separate from the control of the laser operation. That is, in an embodiment, the controller 104 may be dedicated to the control of the ventilation while the laser operations for markings are controlled by a separate controller. In Fig. 11, the valve 350 is open and the valve 352 is closed. Then the gas flows to the blast pipe 206 that has the valve 350 open. The valve 350, 352 may be fully open or partially open in order to have a control of the flow through and from the blast pipes 206.

In an embodiment, the controller 104 of the ventilation system 204 may be implemented as the PLC or based on the PLC. The PCL may be separate from the control of the laser operation.

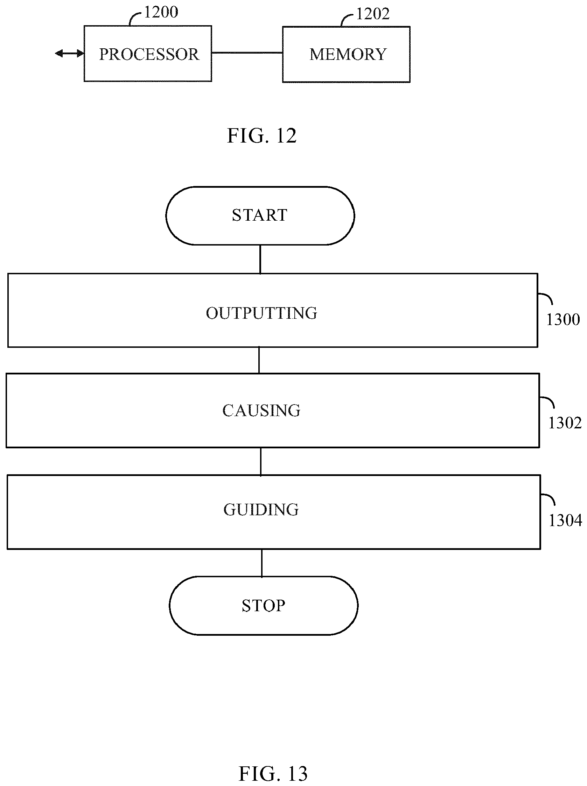

In an embodiment an example of which is illustrated in Fig. 12, the controller 104 may comprise one or more processors 1200, and one or more memories 1202 including computer program code. The one or more memories 1202 and the computer program code may with the one or more processors 1200 cause controller 104 to control the actuator 500 to move the at least one mouthpiece 400 of the one or more blast pipes 206.

The term "computer" includes a computational device that performs logical and arithmetic operations. For example, a "computer" may comprise an electronic computational device, such as an integrated circuit, a microprocessor, a mobile computing device, a laptop computer, a tablet computer, a personal computer, or a mainframe computer. A "computer" may comprise a central processing unit, an ALU (arithmetic logic unit), a memory unit, and a control unit that controls actions of other components of the computer so that steps of a computer program are executed in a desired sequence. A "computer" may also include at least one peripheral unit that may include an auxiliary memory (such as a disk drive or flash memory), and/or may include data processing circuitry.

A user interface 108 means an input/output device and/or unit. Nonlimiting examples of a user interface include a touch screen, other electronic display screen, keyboard, mouse, microphone, handheld electronic game controller, digital stylus, display screen, speaker, and/or projector for projecting a visual display.

An additional technical feature and advantage is that the gas flow automatically starts when the marking apparatus is switched on. That means, no separate control of the gas flow is needed. That is also economical.

Figure 8 is a flow chart of the measurement method. In step 1300, optical power is output along an optical path 210 to a marking area 20 by the laser arrangement 100.

In step 102, a gas flow is caused through a case 200 of the laser arrangement 100 by a ventilation system 204. In step 304, the gas flow is guided from the case 200 toward the optical path 210 of the optical power between the case 200 and the marking area 20 by one or more blast pipes 206 for reducing dust and/or smoke in the optical path 210.

The method shown in Fig. 13 may be implemented as a logic circuit solution or computer program (see also Fig. 12). The computer program may be placed on a computer program distribution means for the distribution thereof. The computer program distribution means is readable by a data processing device, and it encodes the computer program commands, carries out the measurements and optionally controls the processes on the basis of the measurements.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

It will be obvious to a person skilled in the art that, as technology advances, the inventive concept can be implemented in various ways. The invention and its embodiments are not limited to the example embodiments described above but may vary within the scope of the claims.

## Claims

1. A marking apparatus comprising a laser arrangement (100), **characterized in that** the laser arrangement (100) configured to output optical power along an optical path (210) to a marking area (20), and the marking apparatus (2) comprises
a case (200) of the laser arrangement (100), and a ventilation system (204) for causing a gas flow through the case (200), the ventilation system (204) comprising one or more blast pipes (206) connected to the case (200), the one or more blast pipes (206) being configured to guide the gas flow from the case (200) toward the optical path (210) of the optical power between the case (200) and the marking area (20) for reducing dust and/or smoke in the optical path (210).

2. The apparatus of claim 1, **characterized in that** at least one of the one or more blast pipes (206) comprises a nozzle (402) configured to direct the gas flow to the optical path (210).

3. The apparatus of claim 1, **characterized in that** at least one of the one or more blast pipes (206) is bendable for moving a mouthpiece (400) of the at least one blast pipe (206) to enable the gas flow to be directed to a desired location at the optical path (210).

4. The apparatus of claim 1, **characterized in that** the ventilation system (204) comprises an actuator (500) configured to move the at least one mouthpiece (400) of the one or more blast pipes (206).

5. The apparatus of claim 4, **characterized in that** a controller (104) of the marking apparatus (2) is configured to cause the actuator (500) to move the at least one of the one or more blast pipes (206) in a sweeping manner over at least a part of the optical path (210).

6. The apparatus of claim 4, **characterized in that** a controller (104) of the marking apparatus (2) is configured to cause the actuator (500) to move the at least one of the one or more blast pipes (206) to direct the gas flow toward at least one of the following: the laser arrangement (100), the optical path (210) between the laser arrangement (100) and the marking area (20) and the marking area (20).

7. The apparatus of claim 1, **characterized in that** the ventilation system (204) comprises at least two output blast pipes (206) that are configured to direct gas to the optical path (210) from different directions and/or at different distances from the case (200).

8. The apparatus of claim 1, **characterized in that** the ventilation system (204) comprises at least one vacuum pipe (208) that is configured to suck gas with dust and smoke from the optical path (210), the vacuum pipe (208) being powered by the ventilation system (204).

9. The apparatus of claim 1, **characterized in that** the ventilation system (204) comprises a codirectional blast pipe (206') of the one or more blast pipes (206), the codirectional blast pipe (206') being configured to surround the optical path (210) for a part of a distance between the case (200) and marking area (20), and the codirectional blast pipe (206') being configured to guide the gas flow from the case (200) in a parallel direction to the optical path (210) between the laser source (200) and the marking area (20).

10. The apparatus of claim 1, **characterized in that** the ventilation system (204) with the one or more blast pipes (206) and the case (200) form an integrated enclosure that is dust tight and/or watertight according to an international standard IP65.

11. The apparatus of claim 1, **characterized in that** at least one electrical power circuit (202) configured to supply electrical power for operation of the laser arrangement (100) is located within the case (200).

12. An apparatus of claim 4, **characterized in that** the marking apparatus (2) comprises one or more processors (1200) and one or more memories (1202) including computer program code; and
the one or more memories (1202) and the computer program code configured to, with the one or more processors (1200), cause marking apparatus at least to control the actuator (500) to move the at least one mouthpiece (400) of the one or more blast pipes (206).

13. A marking method, **characterized by** outputting (1300), by a laser arrangement (100), optical power along an optical path (210) to a marking area (20);
causing (1302), by a ventilation system (204), a gas flow through a case (200) of the laser arrangement (100); and
guiding (1304), by one or more blast pipes (206), the gas flow from the case (200) toward the optical path (210) of the optical power between the case (200) and the marking area (20) for reducing dust and/or smoke in the optical path (210).
